# EUROPÄISCHE PATENTSCHRIFT

(11) **EP 1 484 162 B1**
(45) Veröffentlichungstag und Bekanntmachung des Hinweises auf die Patenterteilung: **28.12.2011**
(21) Anmeldenummer: 03012721.1
(22) Anmeldetag: 04.06.2003
(51) Int. Cl.: B29C 69/00, B29C 45/00, B29C 65/02, B29K 67/00

(54) **Verfahren zur Herstellung eines Kunststoffkörpers sowie Behälter**
Method of manufacturing a plastic body and container
Procédé de fabrication d'un corps en matière plastique et récipient

(43) Veröffentlichungstag der Anmeldung: 08.12.2004
(73) Patentinhaber: Weener Plastik AG, 26826 Weener (DE)
(72) Erfinder: Hackmann, Bernd, 26831 Wymeer (DE)
(74) Vertreter: Wallinger, Michael

(56) Entgegenhaltungen:
- EP-A- 0 683 031
- WO-A-02/36319
- WO-A-02/49924
- CH-A- 251 462
- DE-A- 2 157 132
- DE-A- 10 158 698
- FR-A- 2 537 915
- FR-A- 2 780 911
- US-A- 5 723 085
- US-A1- 2003 029 876
- PATENT ABSTRACTS OF JAPAN vol. 2003, no. 01, 14. Januar 2003 (2003-01-14) & JP 2002 248650 A (CANON INC), 3. September 2002 (2002-09-03)
- PATENT ABSTRACTS OF JAPAN vol. 1998, no. 10, 31. August 1998 (1998-08-31) & JP 10 128798 A (MOLTEN CORP), 19. Mai 1998 (1998-05-19)
- PATENT ABSTRACTS OF JAPAN vol. 018, no. 056 (M-1551), 28. Januar 1994 (1994-01-28) & JP 05 278739 A (MITSUI PETROCHEM IND LTD), 26. Oktober 1993 (1993-10-26)
- PATENT ABSTRACTS OF JAPAN vol. 002, no. 148 (C-030), 9. Dezember 1978 (1978-12-09) & JP 53 114877 A (UNITIKA LTD), 6. Oktober 1978 (1978-10-06)

## Beschreibung

Die Erfindung betrifft ein Verfahren zur Herstellung eines Kunststoffkörpers sowie einen Behälter.

Aus dem Stand der Technik sind Verfahren zur Herstellung von Kunststoffkörpern bereits bekannt. So offenbart etwa FR 2537915 A ein Verschweißen von Kunststoffkörpern, bei dem die Verbindung durch den Vorgang des Kontaktierens und die Vermengung erfolgt. In DE 2157132 A werden beispielsweise zwei Formkörper durch homogenes Verschweißen zusammengefügt. In WO 0236319 A werden die zu verbindenden Stellen der einzelnen Formkörper vor Zusammenfügen durch Heizelemente so lange erhitzt, bis diese schmelzen, so dass die Verbindung der einzelnen Formkörper durch Verschmelzen stattfindet.

Der Erfindung liegt die Aufgabe zugrunde, ein weiteres Verfahren zur Herstellung eines Kunststoffkörpers zu schaffen, mittels welchem sich Kunststoffkörper auf, insbesondere fertigungstechnisch, einfache Weise kostengünstig herstellen lassen.

Die Aufgabe wird durch ein Verfahren gemäß Anspruch 1 gelöst.

Bevorzugte Gestaltungen sind Gegenstand der Unteransprüche.

Erfindungsgemäß ist insbesondere ein Verfahren zur Herstellung eines Kunststoffkörpers vorgesehen, bei dem dieser Kunststoffkörper aus mehreren Teilen bzw. aus mehreren Teilkörpern hergestellt wird. Erfindungsgemäß ist vorgesehen, dass ein erster Teilkörper gefertigt wird sowie - insbesondere separat - ein zweiter Teilkörper. Zumindest einer dieser ist Teilkörper so gefertigt wird, dass bei dem Fertigen zumindest ein Bereich dieses Teilkörpers erwärmt wird bzw. erwärmt ist.

Ferner ist erfindungsgemäß vorgesehen, dass der erste Teilkörper und der zweite Teilkörper relativ zueinander so positioniert werden, dass diese Teilkörper in Kontakt stehen oder im wesentlichen in Kontakt stehen und sich unter der Ausnutzung der aus dem Herstellungsprozess dieser bzw. eines dieser Teilkörper resultierenden (Rest)Wärme durch Verhaken und / oder Verfilzen von Molekülketten und / oder unter Wirkung bzw. Bildung von Van-der-Waalsschen Kräften und / oder unter Wirkung bzw. Bildung von Wasserstoffbrücken zu einem einstückigen Körper verbinden. Die Restwärme ist insbesondere eine natürliche Restwärme.

Es verfilzen bzw. verhaken sich insbesondere Molekülketten der unterschiedlichen Teilkörper bei dem Entstehen der einstückgigen Verbindung. Insbesondere werden Wasserstoffbücken zwischen den Teilkörper gebildet, also insbesondere Wasserstoffbrücken die die Verbindung der Teilkörper erzeugen oder miterzeugen. Die Van-der-Waalschen Kräften wirken insbesondere so zwischen den Körpern, das eine Verbindung der Teilkörper erzeugt wird bzw. durch diese miterzeugt wird.

Besonders bevorzugt ist vorgesehen, dass die Teilkörper, also insbesondere der erste und der zweite Teilkörper, so zu einander positioniert werden, dass sie in Kontakt stehen bzw. im wesentlichen in Kontakt stehen, wobei der erste und / oder der zweite Teilkörper eine Restwärme aufweist, die aus seinem Herstellungsprozess resultiert, wobei unter Ausnutzung bzw. Wirkung dieser Restwärme des ersten und / oder des zweiten Teilkörpers eine einstückige Verbindung dieser Teilkörper erzeugt wird bzw. sich bildet, und wobei diese Verbindung durch ein Verhaken und ein Verfilzen von Molekülketten und durch Van-der-Waalssche Kräfte und durch Wasserstoffbrücken bzw. Wasserstoffbrückenbildung entsteht.

Die Restwärme des ersten und / oder des zweiten Teilkörpers ist insbesondere so, dass zumindest in dem Bereich des ersten und /oder des zweiten Teilkörpers, der mit dem jeweils anderen dieser Teilkörper in Kontakt gebracht wird, ausreichend Wärmeenergie gegeben ist, um die Verbindung der Teilkörper über Verhaken und / oder Verfilzen von Molekülketten und / oder durch Van-der-Waalssche Kräfte und / oder durch Wasserstoffbrücken bzw. Wasserstoffbrückenbildung zu erzeugen. Vorzugsweise ist diese Restwärme so, dass die Temperatur des ersten und / oder zweiten Teilkörpers beim in Kontakt bringen dieser Körper und / oder während des gesamten Verbindungsprozesses oberhalb von 75°C ist, und zwar insbesondere im jeweiligen Kontaktbereich dieser Teilkörper.

Vorzugsweise ist die Temperaturverteilung nach dem Herstellungsprozess des ersten und / oder zweiten Teilkörpers bzw. bei in Kontaktbringen dieser Körper in diesem Körper und in bezug auf diesen jeweiligen Körper im wesentlichen gleich; es kann auch eine - zumindest gewisse - ungleichförmige Temperaturverteilung diesem Teilkörpern oder diesen Teilkörpern in den genannten Situationen gegeben sein.

Der erste und / oder der zweite Teilkörper sind insbesondere jeweils vollständig aus Kunststoff gefertigt oder weisen Kunststoff auf. Insbesondere ist vorgesehen, dass im Bereich der Verbindungsstelle diese Teilkörper aus Kunststoff hergestellt sind. Die beiden Teilkörper können aus dem gleichen oder aus unterschiedlichen Kunststoffen hergestellt sein.

Vorzugsweise ist der erste und / oder der zweite Teilkörper aus einem thermoplastischen Kunststoff gefertigt oder weist thermoplastischen Kunststoff, und zwar insbesondere im Bereich, in dem diese Teilkörper verbunden werden sollen.

In bevorzugter Gestaltung ist einer oder sind beide der Teilkörper jeweils aus Polyethylenterephthalat (PET) hergestellt, und zwar vollständig oder im Bereich der Verbindungsstelle. Bevorzugt ist auch, dass als Werkstoff Polyethylenterephthalatglycol (PETG) gewählt wird. Auch andere Werkstoffe sind bevorzugt.

Ferner sei angemerkt, dass der zu fertigende Körper auch aus mehr als zwei Teilkörpern mit dem erfindungsgemäßen Verfahren gefertigt werden kann.

Der Kunststoffkörper, der mit dem erfindungsgemäßen Verfahren hergestellt wird bzw. werden kann, kann unterschiedlichster Art sein.

Beispielsweise, ohne dass die Erfindung hierdurch beschränkt werden soll, kann dieser Kunststoffkörper ein Behälter oder ein Teil eines Behälters sein. Ein derartiger Kunststoffkörper kann insbesondere eine Deorollerflasche oder eine Deorollerkugel oder ein Reagenzglas oder ein Tiegel sein.

Bevorzugt ist ferner, dass der Kunststoffkörper ein mehrwandiger Behälter ist. So kann beispielsweise ein Teilkörper ein solcher sein, der die Außenwand eines herzustellenden doppelwandigen Kunststoffkörpers aufweist und ein weiterer Teilkörper ein solcher, der eine Innenwand des zu fertigenden Kunststoffkörpers aufweist.

Die Erfindung ist allerdings nicht auf die Herstellung von Behältern oder Behälterteilen beschränkt. Vielmehr können auch andere Gestaltungen, die aus Kunststoff oder Kunststoff aufweisenden Teilkörpern gefertigt werden, mit dem erfindungsgemäßen Verfahren hergestellt werden.

Zur vereinfachten Darstellung wird die Erfindung im folgenden anhand eines Kunststoffkörpers erläutert, der als Behälter gestaltet ist. Es sei allerdings angemerkt, dass die Erfindung hierdurch nicht beschränkt werden soll.

Zum Begriff des Kunststoffkörpers sei noch angemerkt, dass der Kunststoffkörper ein Körper bzw. der beispielhaften Gestaltung ein Behälter sein kann, der vollständig aus Kunststoff besteht oder der Kunststoff aufweist. Der Behälter kann homogen aus dem gleichen Kunststoff gefertigt sein oder aus unterschiedlichen Kunststoffen.

Der Kunststoffkörper kann insbesondere auch ein fertiges Produkt oder ein halbfertiges Produkt sein bzw. eine Produktzwischenstufe.

In einer bevorzugten Gestaltung werden sowohl der erste als auch der zweite Teilkörper in einem Herstellungsverfahren hergestellt, bei dem die sich bildenden Teilkörper jeweils zumindest partiell erwärmt sind, wobei sie anschließend so zueinander angeordnet werden, dass sie im wesentlichen in Kontakt stehen und sich mit der Ausnutzung der aus dem Herstellungsprozess resultierenden Restwärme durch Verhaken und / oder Verfilzen von Molekülketten und / oder unter Wirkung bzw. Bildung von Van-der-Waalsschen Kräften und / oder unter Bildung von Wasserstoffbrücken zu einem einstückigen Körper verbinden.

Es sei angemerkt, dass die partielle Erwärmung insbesondere so sein kann, dass Teile des Körpers erwärmt sind, während andere Teile des Körpers im wesentlichen Umgebungstemperatur aufweisen.

Bevorzugt ist allerdings auch, dass zumindest einer oder beide Teilkörper vollständig bei ihrem jeweiligen Herstellungsprozess erwärmt sind.

Die erwähnten Teilkörper können jeweils eine gleichmäßige (Rest)Temperaturverteilung aufweisen oder eine sich über das Körpervolumen verändernde. Die verschiedenen Teilkörper können eine gleiche oder eine unterschiedliche (Rest)Temperatur aufweisen.

In bevorzugter Gestaltung ist die Restwärme so, dass eine Resttemperatur an den zu verbindenden Stellen der beiden Teilkörper gegeben ist, die, zumindest zu Beginn des Verbindungsprozesses und / oder während des gesamten Verbindungsprozesses oberhalb von 45°, besonders bevorzugt oberhalb von 50°, vorzugsweise oberhalb von 60°, bevorzugt oberhalb von 70°, besonders bevorzugt oberhalb von 75 , besonders bevorzugt oberhalb von 80° oder größer ist.

Insbesondere ist erfindungsgemäß vorgesehen, dass die (Rest)Temperatur bzw. Restwärme so ist, dass sie ausreichend ist, um die in Kontakt gebrachten Teilkörper zu verbinden, und zwar insbesondere durch Verhaken und / oder Verfilzen von Molekülketten und / oder unter Wirkung bzw. Bildung von Van-der-Waalsschen Kräften und / oder unter Wirkung bzw. Bildung von Wasserstoffbrücken. Die Temperatur kann von dem Material der zu verbindenden Körper abhängen und oberhalb oder zwischen oder ggf. unterhalb der genannten Temperaturwerte sein.

In bevorzugter Gestaltung werden die Teilkörper in einem Gießverfahren hergestellt. Besonders bevorzugt ist vorgesehen, dass die Teilkörper jeweils in einem Spritzgießverfahren hergestellt werden.

Die Restwärme, die ausgenutzt wird, um die Körper zu einem einstückigen Körper zu verbinden, ist insbesondere die in dem jeweiligen Teilkörper gespeicherte Wärme bzw. ein Teil dieser Wärme, die beim Herstellungsprozess dieser Teilkörper gegeben ist.

Beispielsweise, ohne dass diese Erfindung hierdurch beschränkt werden soll, sei in bezug auf ein mögliches Spritzgießverfahren erwähnt, dass beim Herstellen der Teilkörper das Material bzw. Kunststoffmaterial erwärmt bzw. erhitzt wird, so dass es beim Spritzgießen flüssig ist und in Formen gegossen bzw. gespritzt wird. Nach Abschluss des Spritzgießens kühlt sich der sich bildende bzw. gebildete Teilkörper ab, wobei er Wärme an die Umgebung abgibt. Diese Wärme ist zunächst in dem Teilkörper gespeichert. Diese bzw. ein Teil dieser gespeicherten Restwärme wird erfindungsgemäß ausgenutzt, um die Verbindung mit einem weiteren Teilkörper zu erzeugen.

In bevorzugter Gestaltung werden die Teilkörper zum Verbinden durch Verhaken und / oder Verfilzen von Molekülketten und / oder unter Wirkung bzw. Bildung von Van-der-Waalsschen Kräften und / oder unter Bildung von Wasserstoffbrücken zu einem einstückigen Körper so miteinander in Kontakt gebracht, dass sie sich im wesentlichen vorspannungsfrei oder druckfrei kontaktieren oder so, dass zwischen ihnen eine Vorspannung gegeben ist, oder so, dass die Teilkörper werden aneinander gedrückt bzw. gepresst werden.

In bevorzugter Gestaltung werden die zu verbindenden Teilkörper mittels des erfindungsgemäßen Verfahrens so miteinander verbunden, dass zum Verbinden im wesentlichen keine externe Wärmeenergie zugeführt wird. Besonders bevorzugt ist hierbei, dass die Wärmeenergie, die zum Verbinden ausgenutzt wird, Restwärme ist, die in einem oder beiden der zu verbindenden Körper gespeichert ist.

Bevorzugt ist ferner, dass kein zusätzliches Material zum Verbinden extern zugeführt wird, also zusätzlich zu dem Material, welches den zu verbindenden Körpern zugeordnet ist.

Es sei angemerkt, ohne dass die Erfindung hierdurch beschränkt werden soll, dass beispielsweise beim Schweißen Wärme extern zugeführt wird.

In bevorzugter Gestaltung sind der erste und der zweite Teilkörper in einer im wesentlichen geschlossenen Form angeordnet, wenn diese Teilkörper unter Ausnutzung der aus dem Herstellungsprozess dieser Teilkörper verbleibenden Restwärme durch Verhaken und / oder Verfilzen von Molekülketten und / oder unter Wirkung bzw. Bildung von Van-der-Waalsschen Kräften und / oder unter Bildung von Wasserstoffbrücken zu einem einstückigen Körper verbinden miteinander verbunden werden.

Bevorzugt ist allerdings auch, dass diese Teilkörper nicht in einer Form, insbesondere in einer geschlossenen Form, angeordnet sind, wenn sie miteinander einstückig verbunden werden.

Zu der geschlossenen Form, die in einer bevorzugten Ausführungsform verwendet werden kann, sei angemerkt, dass diese Form eine solche sein kann, die beim Vebinden bzw. Fügen im wesentlichen vollständig geschlossen werden kann bzw. ist, oder eine solche, die beim Verbinden bzw. Fügen teilweise geschlossen werden kann bzw. geschlossen ist. Wenn eine derartige geschlossene Form in bevorzugter Gestaltung verwendet wird, kann diese Form separate Teile aufweisen oder miteinander verbundene, beispielsweise gelenkig verbundene, Teile.

In bevorzugter Gestaltung des erfindungsgemäßen Verfahrens werden der erste und der zweite Teilkörper zusätzlich mechanisch gekoppelt.

Eine derartige mechanische Kopplung ist in besonders bevorzugter Gestaltung eine Schnappverbindung.

In besonders bevorzugter Gestaltung ist vorgesehen, dass der erste und der zweite Teilkörper zunächst mittels einer mechanischen Verbindung, insbesondere einer Schnappverbindung, gekoppelt werden und anschließend unter Ausnutzung der Restwärme diese Körper im Kontaktbereich durch Verhaken und / oder Verfilzen von Molekülketten und / oder unter Wirkung bzw. Bildung von Van-der-Waalsschen Kräften und / oder unter Bildung von Wasserstoffbrücken verbunden werden.

Vorzugsweise wird der Behälter bzw. der Kunststoffkörper mittels einer Wendetechnik und / oder einer Etagentechnik hergestellt.

In bevorzugter Gestaltung ist vorgesehen, dass ein erster Formenkörper mit einer ersten Gegenform bzw. einem ersten Deckel vorgesehen ist sowie ein zweiter Formenkörper mit einer zweiten Gegenform bzw. einem zweiten Deckel, wobei diese Formenkörper und / oder -deckel jeweils zwei oder mehrere identische Vertiefungen bzw. Negativkonturen aufweisen.

Bei einer derartigen Gestaltung kann vorgesehen sein, dass in einer jeweiligen ersten Vertiefung des Formenkörpers (in den der Deckel positioniert wird), jeweils in einem Spritzgussprozess auf einen ersten bzw. zweiten Teilkörper gespritzt wird, wobei nach diesem Spritzgießprozess die jeweiligen Formenkörper gewendet werden, so dass diese gespritzten Teilkörper einander zugewandt sind und einander kontaktieren. Besonders bevorzugt sind die Formkörper in dieser Stellung so angeordnet, dass im Bereich der zu verbindenden Teilkörper die Form im wesentlichen geschlossen ist.

Bei dieser bevorzugten Gestaltung kann zeitlich parallel zum Verbinden bzw. Fügen jeweils eine weitere, ggf. identisch gestalteter Formabschnitt im (Spritz)Gießverfahren befüllt werden, so dass der Verbindungsprozess und der Spritzgießprozess weiterer Teilkörper parallel durchgeführt wird, und zwar insbesondere mittels der gleichen Formen. Ein Spritzgießverfahren zur Herstellung weiterer, insbesondere identischer, Teilkörper kann auch zeitlich versetzt oder überlappend durchgeführt werden, sowie mittels anderer bzw. weiterer Formen. Es sei in diesem Zusammenhang angemerkt, dass das erfindungsgemäße Verfahren auch zur Herstellung eines einzigen Kunststoffkörpers verwendet werden kann.

Hinsichtlich der genannten Vertiefungen in den Formen bzw. Abdeckungen sei angemerkt, dass ergänzend oder alternativ an der Form bzw. der Abdeckung auch Erhöhungen vorgesehen sein können.

Vorzugsweise ist vorgesehen, dass die Teilkörper aus dem Spritzgussverfahren in dieser einander zugewandten Stellung noch Restwärme aufweisen, die ausreicht, damit diese Teilkörper einstückig verbunden werden. In den jeweils anderen Vertiefungen der beiden Formkörper kann, gegebenenfalls parallel, jeweils ein erster weiterer bzw. zweiter Teilkörper beim Spritzgussverfahren hergestellt werden.

Die Erfindung soll durch die beispielhaften und bevorzugten Gestaltungen nicht beschränkt werden.

Im folgenden werden nun einige bevorzugte Aspekte der Erfindung anhand der Figur näher erläutert, wodurch die Erfindung nicht beschränkt werden soll.

Dabei zeigt:
- Fig. 1: die Schritte eines beispielhaften erfindungsgemäßen Verfahrens in schematischer Darstellung;
- Fig. 2: eine beispielhafte Gestaltung, die mittels des erfindungsgemäßen Verfahrens hergestellt werden kann, in schematischer Darstellung;
- Fig. 3: eine beispielhafte Vorrichtung die zur Durchführung eines beispielhaften erfindungsgemäßen Verfahrens verwendet werden kann, in teilweiser und schematischer Darstellung;
- Fig. 4: eine beispielhafte Gestaltung, die mittels des erfindungsgemäßen Verfahrens hergestellt werden kann, in schematischer Darstellung;
- Fig. 5: einen Ausschnitt aus der Gestaltung gemäß Fig. 4;
- Fig. 6: einen Ausschnitt aus der Gestaltung gemäß Fig. 4; und
- Fig. 7: eine beispielhafte Vorrichtung die zur Durchführung eines beispielhaften erfindungsgemäßen Verfahrens verwendet werden kann, in teilweiser und schematischer Darstellung.

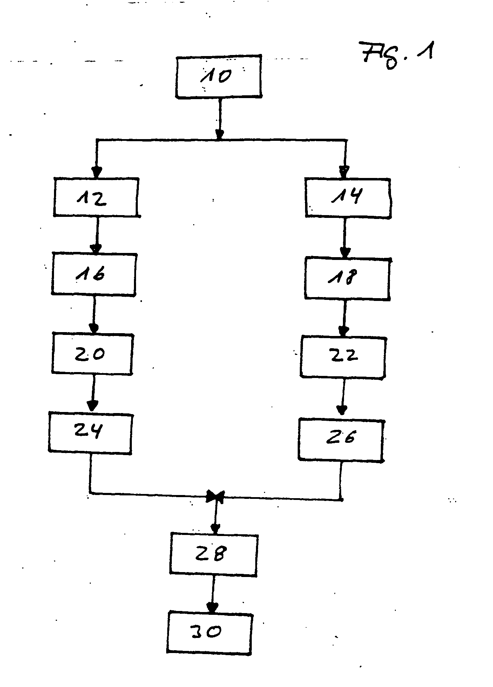

Fig. 1 zeigt die Schritte eines beispielhaften erfindungsgemäßen Verfahrens in schematischer Darstellung.

Im Schritt 10 wird das beispielhafte erfindungsgemäße Verfahren gestartet.

In den Schritten 12 bzw. 14 wird eine erste bzw. zweite Spritzgussform geschlossen, was beispielsweise durch Aufsetzen eines Deckels oder dergleichen bewirkt werden kann.

In den Schritten 16 bzw. 18 werden die jeweiligen Spritzgussformen mit Kunststoff befüllt bzw. bespritzt.

In den Schritten 20 bzw. 22 werden die jeweiligen Formen wieder geöffnet und, falls vorhanden, gegebenenfalls Kerne entnommen.

In den Schritten 24 bzw. 26 werden die Formen, die den ersten Teilkörper bzw. den zweiten Teilkörper beinhalten, jeweils gewendet, so dass diese Teilkörper einander zugewandt sind.

Im Schritt 28 wird sichergestellt, dass sich die Teilkörper kontaktieren, wobei diese aus dem Spritzgussprozess eine Restwärme aufweisen, die zumindest im Bereich der Kontaktstelle oberhalb von 60°, insbesondere oberhalb von 75°C oder oberhalb von 85°C, ist, und zwar zu Beginn des Verbindungsprozesses, und vorzugsweise während des gesamten Verbindungsprozesses.

Diese Temperatur kann insbesondere vom Kunststoffmaterial abhängen, also auch anders gestaltet sein. Bei PET ist sie vorzugsweise oberhalb von 75°C oder oberhalb von 85°C.

Im Schritt 28 findet ferner ein Verbindungsprozess zwischen den Teilkörpern statt, so dass ein einstückiger Kunststoffkörper entsteht, der den ersten und den zweiten Teilkörper aufweist. Diese Verbindung entsteht unter Ausnutzung der aus dem Herstellungsprozess eines oder beider Teilkörper resultierenden Restwärme durch ein Verhaken und ein Verfilzen von Molekülketten und / oder durch Van-der-Waalssche Kräfte und / oder durch Wasserstoffbrückenbildung.

Im Schritt 30 wird das Verfahren beendet.

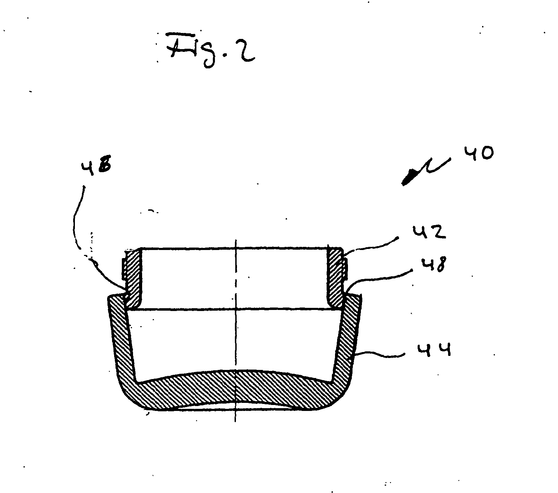

Fig. 2 zeigt einen beispielhaften Körper, der sich mittels eines erfindungsgemäßen Verfahrens herstellen lässt.

In Fig. 2 ist ein als Behälter bzw. Tiegel 40 gestalteter Kunststoffkörper gezeigt. Der Tiegel 40 weist einen ersten Teilkörper auf, der als Tiegelmündung 42 gestaltet ist, sowie einen zweiten Teilkörper, der als Tiegelhülle 44 gestaltet ist.

Beim Verfahren zur Herstellung dieses Tiegels 40 wurden die Tiegelmündung 42 und die Tiegelhülle 44 zunächst separat voneinander in einem jeweiligen Spritzgussprozess hergestellt und anschließend so zusammengefügt, dass unter Ausnutzung der Restwärme, die aus den Spritzgussprozessen resultierte, eine einstückige Verbindung zwischen der Tiegelmündung 42 und der Tiegelhülle 44 entstanden ist. Diese Verbindung ist im Kontaktbereich 46 bzw. 48 entstanden. Insbesondere ist vorgesehen, dass die Bereiche 46, 48 um die zentrale Achse des Tiegels 40 umlaufen.

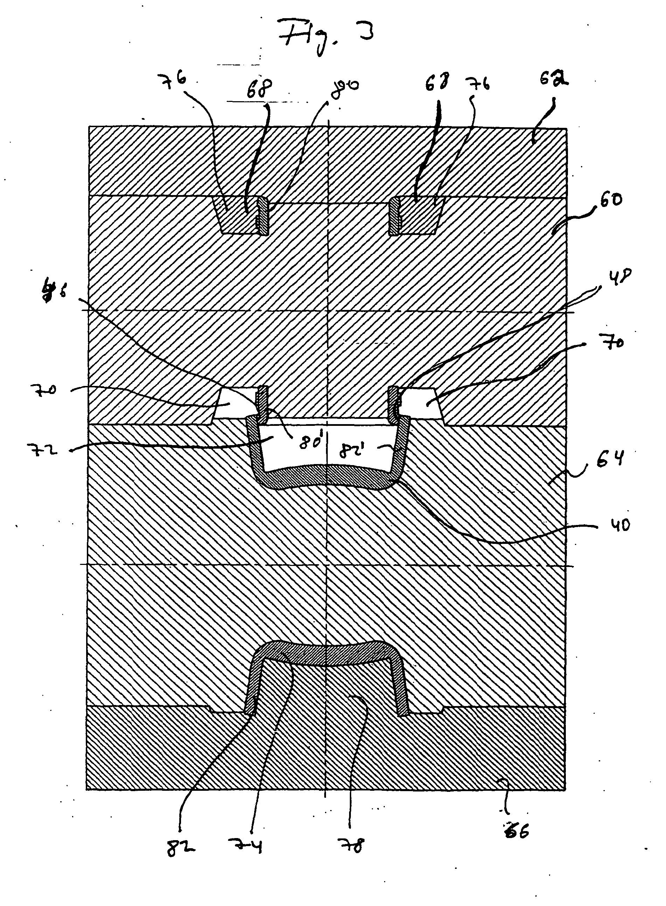

Fig. 3 zeigt eine beispielhafte, teilweise dargestellte Vorrichtung, mit welcher sich der Gegenstand gemäß Fig. 2 herstellen lässt.

In Fig. 3 ist eine erste Form 60 mit einer ersten Formabdeckung 62 sowie eine zweite Form 64 mit einer zweiten Formabdeckung 66 gezeigt.

Die Formen 60, 64 weisen jeweils Gießformkonturen bzw. Vertiefungen 68, 70, 72, 74 auf. Gegebenenfalls sind ferner an den Abdeckungen 62, 66 Kerne 76, 78 vorgesehen.

Der Kern 78 ist fest an der Abdeckung 76 angeordnet, und der Kern 76 ist verschieblich an der Abdeckung 62 angeordnet bzw. weist Teile auf, die relativ verschieblich zueinander an der Abdeckung 62 angeordnet sind, so dass sich auch Hinterschneidungen fertigen lassen und der Kern 68 entnommen werden kann, ohne dass das Formteil entnommen werden muss.

Es sei allerdings angemerkt, dass je nach dem zu formenden Gegenstand die unterschiedlichsten Gestaltungen möglich sind.

Ferner sei angemerkt, dass auch separate Kerne vorgesehen sein können oder, je nach Gestaltung des zu fertigenden Gegenstandes, Kerne auch weggelassen werden können. Die Erfindung soll durch die Anordnung der Kerne oder deren Vorhandensein oder auch deren Gestaltung nicht beschränkt werden; insbesondere die Darstellung zu den Kernen, Formen und Formabdeckungen ist vielmehr rein beispielhafter Natur; das erfindungsgemäße Verfahren lässt sich auch mit anderen Gestaltungen durchführen.

In der Gestaltung gemäß Fig. 3 wird durch die Abdeckung 62 bzw. die in der Form 60 vorgesehene Vertiefung 68 sowie den Kern 76 die Form des zu fertigenden ersten Teilkörpers definiert.

In entsprechender Weise wird durch den Kern 78 und die Form 64 bzw. die in der Form 64 vorgesehene Vertiefung 74 sowie die Abdeckung 66 die Form des zweiten Teilkörpers 82 definiert.

Mittels der Abdeckungen 62, 66 werden die Formen 60, 64 verschlossen. Anschließend wird in einem Spritzgießverfahren der erste Teilkörper 80 gefertigt sowie der zweite Teilkörper 82, wobei diese sich bildenden Teilkörper 80, 82 beim Fertigen erwärmt sind. Anschließend werden die Abdeckungen 62, 66 entfernt und die Formen 60, 64 gewendet, so dass die Teilkörper 80, 82 bzw. die Teilkörper 80' bzw. 82' einander zugewandt sind und sich in einem Kontaktbereich 46, 48 im wesentlichen berühren.

Hierbei sind die Teilkörper 80', 82' in einer im wesentlichen geschlossenen Form angeordnet, die durch die Formen 60, 64 bzw. deren Vertiefungen 70, 72 im zugewandten Bereich der Formen 60, 64 gebildet werden.

Die Teilkörper 80', 82' weisen zu diesem Zeitpunkt noch eine aus dem Spritzgießprozess herrührende Restwärme auf, die ausgenutzt wird, um eine einstückige Verbindung zwischen dem ersten Teilkörper 80' und dem zweiten Teilkörper 82' im Kontaktbereich 46, 48 herzustellen.

Zusätzlich können, gegebenenfalls parallel zu diesem Füge- bzw. Verbindungsprozess, die Abdeckungen 62, 66 sowie die Kerne 76, 74 entsprechend positioniert werden, so dass weitere Teilkörper 80, 82 gefertigt werden können, die in entsprechender Weise zeitlich später dann zu einem einstückigen Kunststoffkörper- bzw. Tiegel 40 zusammengefügt werden können.

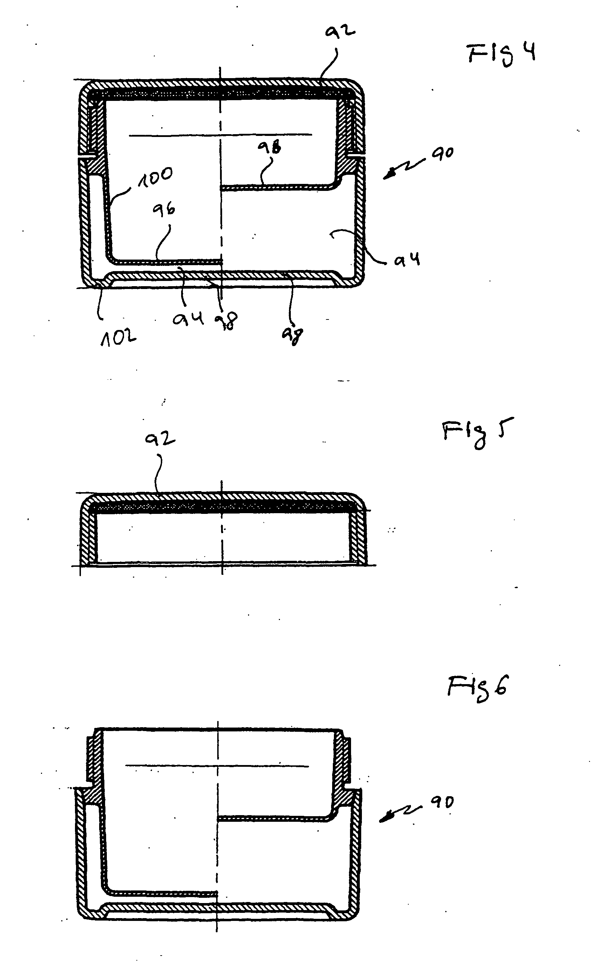

Fig. 4 zeigt eine beispielhafte Gestaltung eines Kunststoffkörpers, der sich mit dem erfindungsgemäßen Verfahren herstellen lässt.

In Fig. 4 ist ein doppelwandiger Behälter 90 mit einem Deckel 92 gezeigt.

In Fig. 4 sind ferner auf den beiden Seiten der zentralen Mittelschnittlinie unterschiedliche Behälterformen gezeigt, die sich im wesentlichen durch ihr Volumen bzw. die Größe des im Boden bereits vorgesehenen Zwischenraums 94 zwischen der Innenwandung 96 und der Außenwandung 98 unterscheiden.

Der Behälter 90 ist in der Gestaltung gemäß Fig. 4 einstückig aus einem ersten Teilkörper 100 sowie einem zweiten Teilkörper 102 geformt.

Der Deckel 92 ist abnehmbar an dem Behälter 90 angeordnet. Es kann allerdings auch vorgesehen sein, dass auch der Deckel einstückig mit dem Behälter 90 verbunden wird oder dass der Deckel seinerseits aus mehreren Teilkörpern zu einem einstückigen oder bereichsweise einstückigen Deckel 92 mit dem erfindungsgemäßen Verfahren zusammengefügt wurde. Der Deckel 92 kann ebenfalls mittels eines erfindungsgemäßen Verfahrens hergestellt sein oder auch andere Weise.

In Fig. 5 ist der Deckel aus Fig. 4 isoliert dargestellt.

In Fig. 6 ist der Behälter 90 isoliert dargestellt, also so, dass er keinen Deckel 92 aufweist.

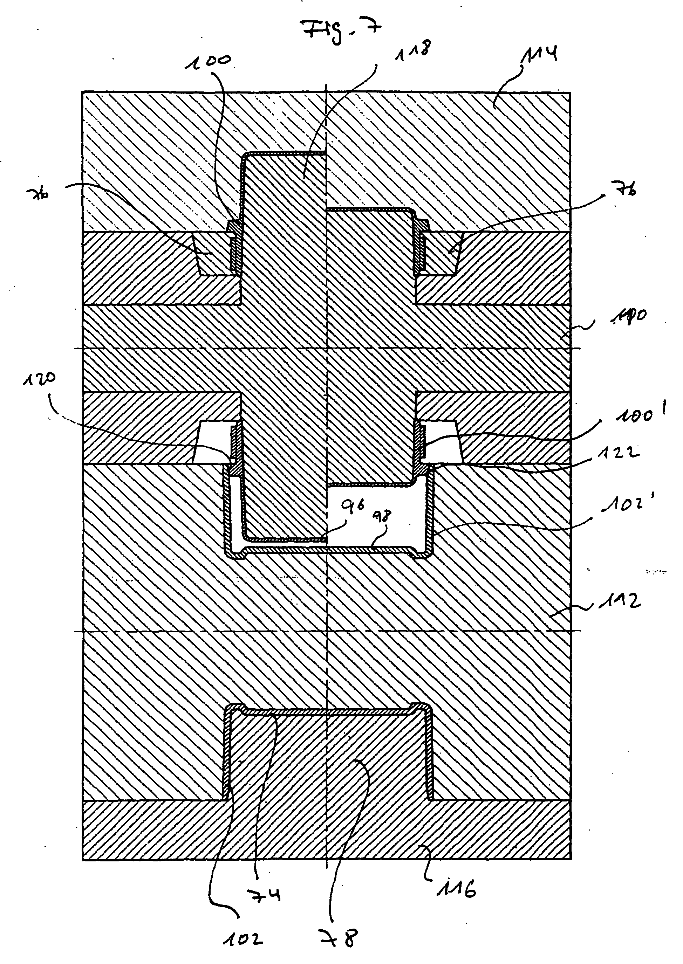

Anhand von Fig. 7 soll nun ein beispielhaftes erfindungsgemäßes Verfahren erläutert werden, mit dem sich die in den Fig. 4 bis 6 dargestellte Gestaltung herstellen läßt.

Die in Fig. 7 teilweise und beispielhaft dargestellte Vorrichtung weist eine erste Form 110 sowie eine zweite Form 112 auf. Zur Abdeckung der ersten Form 100 beim Spritzgießen ist eine erste Abdeckung 114 vorgesehen und zur Abdeckung der zweiten Form 112 beim Spritzgießen ist eine zweite Abdeckung 116 vorgesehen.

Im Gegensatz zu der beispielhaften Gestaltung gemäß Fig. 3 ist in der ersten Form 100 auch eine Erhöhung 118 vorgesehen.

Das Innenteil 100 bzw. der Teilkörper 100 und das Außenteil 102 bzw. der Teilkörper werden im Bereich der Kontaktstellen 120, 122 im dergestalt verbunden, wie es anhand der Fig. 2 erläutert wurde.

### Bezugszeichen

- 10: Schritt
- 12: Schritt
- 14: Schritt
- 16: Schritt
- 18: Schritt
- 20: Schritt
- 22: Schritt
- 24: Schritt
- 26: Schritt
- 28: Schritt
- 30: Schritt
- 40: Tiegel, Kunststoffkörper
- 42: Tieglmündung, erster Teilkörper von 40
- 44: Tiegelhülle, zweiter Teilkörper von 40
- 46: Kontakt- bzw. Verbindungsbereich
- 48: Kontakt- bzw. Verbindungsbereich
- 60: erste Form
- 62: erste Formabdeckung
- 64: zweite Form
- 66: zweite Formabdeckung
- 68: Vertiefung in 60
- 70: Vertiefung in 60
- 72: Vertiefung in 64
- 74: Vertiefung in 64
- 76: Kern an 62
- 78: Kern an 66
- 80: erster Teilkörper von 40
- 80': erster Teilkörper von 40

- 82: zweiter Teilkörper von 40
- 82': zweiter Teilkörper von 40
- 90: doppelwandiger Behälter
- 92: Deckel von 92
- 94: Zwischenraum
- 96: Innenwandung
- 98: Außenwandung
- 100: erster Teilkörper
- 102: zweiter Teilkörper
- 110: erste Form
- 112: zweite Form
- 114: Abdeckung vom 110
- 116: Abdeckung vom 112
- 118: Erhöhung
- 120: Kontaktstelle
- 122: Kontaktstelle

## Patentansprüche

1. Verfahren zur Herstellung eines Kunststoffkörpers (40, 90) aus mehreren Teilen, mit den Schritten:
- Fertigen eines ersten Teilkörpers (42, 80, 100) sowie eines zweiten Teilkörpers (44, 82, 102), wobei zumindest einer dieser Teilkörper (42, 44, 80, 82, 100, 102) in einem Herstellungsverfahren hergestellt wird, bei dem der sich bildende Teilkörper (42, 44, 80, 82, 100, 102) zumindest partiell erwärmt ist,
wobei dieses Herstellungsverfahren ein Gießverfahren, insbesondere ein Spritzgießverfahren, ist, bei dem eine erste (60, 110) und eine zweite (64, 112) Form mit Kunststoff befüllt oder bespritzt werden;
wobei ferner folgende Schritte vorgesehen sind:
- Abkühlung des sich gebildeten Teilkörpers (42, 80, 100) nach Abschluss des Gießverfahrens, wobei der Teilkörper Wärme an die Umgebung abgibt,
- Positionieren des ersten Teilkörpers (42, 80, 100) relativ zum zweiten Teilkörper (44, 82, 102) derart, dass diese Teilkörper (42, 44, 80, 82, 100, 102) in Kontakt stehen und sich unter Ausnutzung der aus dem Herstellungsprozess wenigstens eines der Teilkörper (42, 44, 80, 82, 100, 102) resultierenden Restwärme, mit einer Resttemperatur von oberhalb 45°C zumindest zu Beginn des Verbindungsprozesses und/oder während des gesamten Verbindungsprozesses an den zu verbindenden Stellen der beiden Teilkörper, insbesondere zwischen 45°C und 85°C, zu einem einstückigen Körper (40, 90) verbinden, wobei diese Restwärme so ist, dass sie ausreichend ist, um die in Kontakt gebrachten Teilkörper zu verbinden,
wobei bei diesem Verbindungsprozess die Verbindung der Teilkörper durch ein Verhaken und / oder Verfilzen von Molekülketten und / oder durch Van-der-Waalssche Kräfte und / oder durch Wasserstoffbrückenbildung entsteht.

2. Verfahren nach Anspruch 1,
**dadurch gekennzeichnet, dass**
die Formen (60, 64, 110, 112) jeweils wenigstens zwei Gießformkonturen (68, 70 bzw. 72, 74) aufweisen, und
zeitlich parallel oder zeitlich überlappend zum Verbindungsprozess ein Spritzgussprozess weiterer Teilkörper (42, 44, 80, 82, 100, 102) mittels der gleichen Formen (60, 64, 110, 112) durchgeführt wird.

3. Verfahren nach Anspruch 1 oder 2,
**dadurch gekennzeichnet, dass**
der erste und/oder der zweite Teilkörper (42, 44, 80, 82, 100, 102) aus einem thermoplastischem Kunststoff gefertigt ist, oder thermoplastischen Kunststoff aufweist, und zwar insbesondere im Bereich (46, 48, 120, 122), in dem diese Teilkörper (42, 44, 80, 82, 100, 102) verbunden werden.

4. Verfahren nach Anspruch 3,
**dadurch gekennzeichnet, dass**
einer oder beide der Teilkörper (42, 44, 80, 82, 100, 102) jeweils aus Polyethylenterephthalat (PET) hergestellt sind, und zwar vollständig oder im Bereich der Verbindungsstellen (46, 48, 120, 122), oder dass vorzugsweise Polyethylenterephthalatglycol (PETG) als Werkstoff gewählt wird.

5. Verfahren nach einem der vorherigen Ansprüche,
**dadurch gekennzeichnet, dass**
bei diesem Verbindungsprozess die Verbindung der Teilkörper (42, 44, 80, 82, 100, 102) durch ein Verhaken und/oder Verfilzen von Molekülketten und/oder durch Van-der-Waalssche Kräfte und/oder durch Wasserstoffbrückenbildung entsteht,
wozu wenigstens einer der Teilkörper (42, 44, 80, 82, 100, 102), zumindest im Kontakt- bzw. Verbindungsbereich (46, 48, 120, 122), eine Temperatur aufweist, die größer als 45 °C ist, und zwar insbesondere wenn die Teilkörper in Kontakt gebracht werden und/oder während des gesamten Verbindungsprozesses.

6. Verfahren nach einem der vorherigen Ansprüche,
**dadurch gekennzeichnet, dass**
der Kontakt zwischen dem ersten (42, 80, 100) und dem zweiten Teilkörper (44, 82, 102) im wesentlichen vorspannungsfrei und/oder druckfrei ist.

7. Verfahren nach einem der Ansprüche 1 bis 5,
**dadurch gekennzeichnet, dass**
der Kontakt zwischen dem ersten (42, 80, 100) und dem zweiten Teilkörper (44, 82, 102) so ist, dass eine Vorspannung und/oder eine gegenseitige Belastung gegeben ist.

8. Verfahren nach einem der vorherigen Ansprüche,
**dadurch gekennzeichnet, dass**
der erste (42, 80, 100) und der zweite Teilkörper (44, 82, 102) in einer im wesentlichen geschlossenen Form (60, 64, 110, 112) angeordnet sind, wenn diese Teilkörper unter Ausnutzung der aus dem Herstellungsprozess resultierenden Restwärme verbunden werden.

9. Verfahren nach einem der vorherigen Ansprüche,
**dadurch gekennzeichnet, dass**
der erste (42, 80, 100) und der zweite Teilkörper (44, 82, 102) zusätzlich mechanisch gekoppelt werden.

10. Verfahren nach einem der vorherigen Ansprüche,
**dadurch gekennzeichnet, dass**
der erste (42, 80, 100) und/oder der zweite Teilkörper (44, 82, 102) Polyester aufweist oder aus Polyester gefertigt ist.

11. Verfahren nach einem der vorherigen Ansprüche,
**dadurch gekennzeichnet, dass**
der erste (42, 80, 100) und/oder der zweite Teilkörper (44, 82, 102) einen thermoplastischen Kunststoff in Kombination mit thermoplastischen oder nichtthermoplastischen Additiven aufweist.

12. Verfahren nach einem der vorherigen Ansprüche,
**dadurch gekennzeichnet, dass**
der Kunststoffkörper (40, 90) ein Behälter oder ein Behälterteil ist.

13. Verfahren nach Anspruch 12,
**dadurch gekennzeichnet, dass** der Behälter ein Tiegel (40) ist mit einer Tiegelmündung (42), die ein erster Teilkörper ist, und einer Tiegelhülle (44), die ein zweiter Teilkörper ist, oder ein doppelwandiger Behälter ist.

## Claims

1. Method for the manufacturing of a plastic body (40, 90) having multiple parts, comprising the steps:
- producing a first partial body (42, 80, 100) and a second partial body (44, 82, 102), wherein at least one of said partial bodies (42, 44, 80, 82, 100, 102) is made by a production process, in which the formed partial body (42, 44, 80, 82, 100, 102) is heated at least in part,
wherein said production process is a casting process, in particular an injection molding process, in which one first (60, 110) and one second (64, 112) mold are filled or injection-molded by plastic;
wherein further the following steps are provided:
- cooling down of the formed partial body (42, 80, 100) after ending of the casting process, whereby the partial body transfers heat to the environment,
- positioning of the first partial body (42, 80, 100) relative to the second partial body (44, 82, 102) such that said partial bodies (42, 44, 80, 82, 100, 102) are in contact and get connected to form a single-piece body (40, 90) by utilizing the residual heat, which results from the production process of at least one of said partial bodies (42, 44, 80, 82, 100, 102), having at least at the beginning of the connection process and/or during the overall connection process a residual temperature higher than 65° C at the connection areas of the two partial bodies, in particular between 45°C and 85°C, wherein said residual heat is sufficient to connect the partial bodies, which contact each other,
wherein the connection of the partial bodies during said connection process results from the catching and/or felting of molecular chains and/or from Van-der-Waals forces and/or from hydrogen bond formation.

2. Method according to claim 1, **characterized in that** the molds (60, 64, 110, 112) have at least two cavities (68, 70, or respectively, 72, 74), respectively, and an injection molding process of further partial bodies (42, 44, 80, 82, 100, 102) is performed simultaneously or temporally overlapping with said connection process by means of the same molds (60, 64, 110, 112).

3. Method according to claim 1 or 2, **characterized in that** the first and/or the second partial body (42, 44, 80, 82, 100, 102) is manufactured from thermoplastics, or comprises thermoplastics, in particular in the connection areas (46, 48, 120, 122), in which said partial bodies (42, 44, 80, 82, 100, 102) are to be connected.

4. Method according to claim 3, **characterized in that** one or both partial bodies (42, 44, 80, 82, 100, 102), respectively, are manufactured from polyethylene terephthalate (PET), namely completely or at least in the connection areas (46, 48, 120, 122), or, preferably, that polyethylene terephthalate glycol (PETG) is chosen to be the material.

5. Method according to one of the previous claims, **characterized in that** the connection of the partial bodies during said connection process results from the catching and/or felting of molecular chains and/or from Van-der-Waals forces and/or from hydrogen bond formation, for which purpose at least one of the partial bodies (42, 44, 80, 82, 100, 102) has a temperature higher than 45°C at least in the contacting area, or respectively, connection area (46, 48, 120, 122), in particular when the partial bodies are brought into contact and/or during the overall connection process.

6. Method according to one of the previous claims, **characterized in that** the contact between the first (42, 80, 100) and the second partial body (44, 82, 102) is substantially free from prestress and/or free from pressure.

7. Method according to one of the previous claims, **characterized in that** the contact between the first (42, 80, 100) and the second partial body (44, 82, 102) is such that a prestress and/or a mutual stress is given.

8. Method according to one of the previous claims, **characterized in that** the first (42, 80, 100) and the second partial body (44, 82, 102) are arranged in a substantially closed form (60, 64, 110, 112), when said partial bodies are connected utilizing the residual heat resulting from the production process.

9. Method according to one of the previous claims, **characterized in that** the first (42, 80, 100) and the second partial body (44, 82, 102) are additionally mechanically coupled.

10. Method according to one of the previous claims, **characterized in that** the first (42, 80, 100) and/or the second partial body (44, 82, 102) comprises polyester or is made from polyester.

11. Method according to one of the previous claims, **characterized in that** the first (42, 80, 100) and/or the second partial body (44, 82, 102) comprises a thermoplastic in combination with thermoplastical or non-thermoplastical additive compounds.

12. Method according to one of the previous claims, **characterized in that** the plastic body (40, 90) is a container or part of a container.

13. Method according to claim 12, **characterized in that** the container is a jar (40), having a jar collar (42), which is a first partial body, and a jar casing (44), which is a second partial body, or that the container is a double-walled container.

## Revendications

1. Procédé destiné à fabriquer un corps en matière plastique (40, 90) en plusieurs parties, comprenant les étapes suivantes :
- fabrication d'un premier corps partiel (42, 80, 100) ainsi que d'un deuxième corps partiel (44, 82, 102), au moins l'un de ces corps partiels (42, 44, 80, 82, 100, 102) étant fabriqué selon un procédé de fabrication d'après lequel le corps partiel (42, 44, 80, 82, 100, 102) est au moins partiellement échauffé,
ce procédé de fabrication étant un procédé de moulage, notamment un procédé de moulage par injection, selon lequel on remplit un premier (60, 110) et un deuxième moule (64, 112) avec de la matière plastique, ou on y injecte celle-ci ;
les étapes suivantes étant en outre prévue :
- refroidissement du corps partiel (42, 80, 100) formé, après achèvement du processus de moulage, le corps partiel délivrant de la chaleur à l'environnement,
- positionnement du premier corps partiel (42, 80, 100) par rapport au deuxième corps partiel (44, 82, 102) de façon telle que ces corps partiels (42, 44, 80, 82, 100, 102) soient en contact réciproque et se lient pour former un corps d'un seul tenant (40, 90), en exploitant la chaleur résiduelle résultant du processus de fabrication d'au moins l'un des corps partiels (42, 44, 80, 82, 100, 102), avec une température résiduelle supérieure à 45°C au moins au début du processus de liaison et/ou pendant la totalité du processus de liaison, au niveau des zones à lier des deux corps partiels, notamment entre 45°C et 85°C, cette chaleur résiduelle étant telle qu'elle soit suffisante pour lier les corps partiels amenés en contact réciproque,
la liaison des corps partiels au cours de ce processus de liaison étant produite par une imbrication réciproque par accrochage et/ou par feutrage de chaines moléculaires et/ou par des forces de van-der-Waals et/ou par la formation de ponts d'hydrogène.

2. Procédé selon la revendication 1,
**caractérisé**
**en ce que** les moules (60, 64, 110, 112) présentent chacun deux contours d'empreinte de moulage (68, 70 respectivement 72, 74), et
**en ce que** l'on effectue en parallèle dans le temps, ou de manière à se chevaucher dans le temps avec le processus de liaison, un processus de moulage par injection d'autres corps partiels (42, 44, 80, 82, 100, 102), au moyen des mêmes moules (60, 64, 110, 112).

3. Procédé selon la revendication 1 ou la revendication 2,
**caractérisé**
**en ce que** le premier et/ou le deuxième corps partiel (42, 44, 80, 82, 100, 102) est réalisé en une matière plastique thermoplastique, ou bien présente une matière plastique thermoplastique, à savoir notamment dans la zone (46, 48, 120, 122) dans laquelle ces corps partiels (42, 44, 80, 82, 100, 102) vont être liés.

4. Procédé selon la revendication 3,
**caractérisé**
**en ce que** l'un des corps partiels (42, 44, 80, 82, 100, 102) ou les deux sont fabriqués chacun en polyéthylène téréphtalate (PET), à savoir en totalité ou dans la région des zones de liaison (46, 48, 120, 122), ou
**en ce que** l'on choisit de préférence du polyéthylène téréphtalate glycolysé (PETG) en guise de matériau.

5. Procédé selon l'une des revendications précédentes,
**caractérisé**
**en ce que** la liaison des corps partiels (42, 44, 80, 82, 100, 102) au cours de ce processus de liaison est produite par une imbrication réciproque par accrochage et/ou par feutrage de chaines moléculaires et/ou par des forces de van-der-Waals et/ou par la formation de ponts d'hydrogène,
ce pour quoi au moins l'un des corps partiels (42, 44, 80, 82, 100, 102) présente, dans la zone de contact à savoir de liaison (46, 48, 120, 122), une température qui est supérieure à 45°C, et ceci notamment lorsque les corps partiels sont amenés en contact réciproque et/ou pendant la totalité du processus de liaison.

6. Procédé selon l'une des revendications précédentes,
**caractérisé**
**en ce que** le contact entre le premier (42, 80, 100) et le deuxième corps partiel (44, 82, 102) est sensiblement exempt de précontrainte et/ou exempt de pression.

7. Procédé selon l'une des revendications 1 à 5,
**caractérisé**
**en ce que** le contact entre le premier (42, 80, 100) et le deuxième corps partiel (44, 82, 102) est tel qu'il existe une précontrainte et/ou une sollicitation de charge réciproque.

8. Procédé selon l'une des revendications précédentes,
**caractérisé**
**en ce que** le premier (42, 80, 100) et le deuxième corps partiel (44, 82, 102) sont agencés dans un moule (60, 64, 110, 112) sensiblement fermé, lorsqu'on réalise la liaison de ces corps partiels en exploitant la chaleur résiduelle résultant du processus de fabrication.

9. Procédé selon l'une des revendications précédentes,
**caractérisé**
**en ce que** l'on réalise en plus un couplage mécanique du premier (42, 80, 100) et du deuxième corps partiel (44, 82, 102).

10. Procédé selon l'une des revendications précédentes,
**caractérisé**
**en ce que** le premier (42, 80, 100) et/ou le deuxième corps partiel (44, 82, 102) comprend du polyester ou est fabriqué en polyester.

11. Procédé selon l'une des revendications précédentes,
**caractérisé**
**en ce que** le premier (42, 80, 100) et/ou le deuxième corps partiel (44, 82, 102) comprend une matière plastique thermoplastique en combinaison avec des additifs thermoplastiques ou non thermoplastiques.

12. Procédé selon l'une des revendications précédentes,
**caractérisé**
**en ce que** le corps en matière plastique (40, 90) est un récipient ou une partie de récipient.

13. Procédé selon la revendication 12,
**caractérisé**
**en ce que** le récipient est une coupelle (40) présentant une bouche de coupelle (42), qui est un premier corps partiel, et une enveloppe de coupelle (44), qui est un deuxième corps partiel, ou est un récipient à double paroi.
